# EUROPÄISCHE PATENTANMELDUNG

(11) **EP 2 734 012 A1**
(43) Veröffentlichungstag der Anmeldung: **21.05.2014**
(21) Anmeldenummer: 13195218.6
(22) Anmeldetag: 14.10.2011
(51) Int. Cl.: H05B 33/08, F21K 99/00

(54) **LED-Leuchte mit integriertem Treiber**

(30) Priorität: 15.10.2010 DE 102010042485; 07.01.2011 DE 102011012672; 07.01.2011 DE 102011008065; 08.04.2011 DE 102011016502
(62) Teilanmeldung aus: 11773230.5
(71) Anmelder: CeramTec GmbH, 73207 Plochingen (DE)
(72) Erfinder: Dohn, Dr. Alexander, 96117 Memmelsdorf (DE); Thimm, Dr. Alfred, 95632 Wunsiedel (DE); Schnagl, Christian, 95186 Höchstädt (DE); Degelmann, Karl, 95615 Marktredwitz (DE); Sutor, Ewald, 85667 Oberpframmen (DE)
(74) Vertreter: Uppena, Franz

(57) **Zusammenfassung**

Bei einer LED-Leuchte mit mindestens einer auf einem keramischen Trägerkörper (32) angeordneten und mit diesem wärmeleitend verbundenen LED (43) und mit einem elektrisch mit der LED (43) verbundenen elektronischen Treiber (17) zur Leistungssteuerung und -versorgung der LED (43) ist der Treiber (17) wärmeleitend mit dem Trägerkörper (32) verbunden, um die elektrische Steuerung und Leistung der LED (43) in der Leuchte zu verbessern.

## Beschreibung

Die Erfindung betrifft eine LED-Leuchte mit mindestens einer auf einem keramischen Träger angeordneten und mit diesem wärmeleitend verbundenen LED und mit einem elektrisch mit der LED verbundenen elektronischen Treiber zur Leistungssteuerung und -versorgung der LED.

LEDs sind Licht emittierende Dioden oder kurz Leuchtdioden und die zugehörigen elektronischen Treiberschaltkreise oder -Baugruppen, die die jeweiligen LEDs zum Leuchten bringen, heißen LED-Treiber.

Die Helligkeit einer LED wächst mit der Leistungsaufnahme. Bei konstanter Halbleitertemperatur ist die Zunahme annähernd proportional. Der Wirkungsgrad sinkt mit steigender Temperatur, deshalb sinkt die Lichtausbeute an der Leistungsgrenze je nach Art der Kühlung ab. Die LED fällt aus, wenn die Temperatur des Halbleiters ein Maximum von zirka 150°C übersteigt.

Die Leistung von Leuchten mit LEDs kann beispielsweise über Widerstandselemente oder Dimmer mit Phasenanschnitt gesteuert werden. Diese Treiber liegen immer in einiger Entfernung von der eigentlichen LED, d. h. nicht in der Leuchte selbst. Nachteilig ist hieran, dass durch die Entfernung des Treibers von der LED die Steuerung der LED träge ist.

LEDs mit hoher Lichtleistung werden im Betrieb so heiß, dass sie gekühlt werden müssen um nicht auszufallen.

WO 2007107601 A1 schlägt zur Kühlung der LEDs vor, diese auf keramische Trägerkörper anzuordnen, die einstückig mit keramischen wärmeabführenden Kühlelementen verbunden sind, so genannte heat sinks. Auf dem Trägerkörper sind die Leiterbahnen aufgebracht, so dass der Trägerkörper als Platine ausgebildet ist. Das besondere hieran ist jedoch, dass auf der Oberfläche des Trägerkörpers versinterte Metallisierungsbereiche als Leiterbahnen aufgebracht sind. Die LEDs werden auf die Leiterbahnen aufgelötet. Die Wärmeableitung ist dadurch extrem hoch und kann durch die Auswahl der Keramik variabel angepasst werden.

Der Erfindung liegt die Aufgabe zugrunde, die elektrische Steuerung und Leistung der LED zu verbessern.

Die erfindungsgemäße LED-Leuchte ist definiert durch die Merkmale von Patentanspruch 1. Demnach ist zumindest eine LED auf einem keramischen Trägerkörper angeordnet, wobei der Treiber zur Steuerung der LED wärmeleitend mit dem Trägerkörper verbunden ist. Durch die Wärmeleitverbindung kann der Treiber unmittelbar auf Temperaturänderungen der LED reagieren. Vorzugsweise ist der Treiber zur Regelung des Versorgungsstroms der LED in Abhängigkeit von der Temperatur des Trägerkörpers und somit in Abhängigkeit von der Temperatur der LED ausgebildet. Mit Treiber wird nachfolgend immer eine elektrische Treiberschaltung verstanden.

Der keramische Trägerkörper kann auf seiner Oberfläche versinterte Metallisierungsbereiche aufweisen, die als Leiterbahnen ausgebildet sind. Die LEDs sind vorzugsweise auf die Leiterbahnen aufgelötet. Hierbei kann der Treiber zusammen mit der LED auf dem Trägerkörper mit versinterten Metallisierungsbereichen verlötet sein. Bevorzugt ist der Treiber in unmittelbarer Nähe bzw. Nachbarschaft zur LED angeordnet. In einer alternativen Ausgestaltung ist der Treiber in einem Elektronikmodul untergebracht, welches sich direkt in der Leuchte in unmittelbarer Nähe zu den LEDs befindet.

Die Erfindung beschreibt somit in einer Ausführungsform eine keramische Leuchte mit Treiber in unmittelbarer Umgebung der LED als Leistungsbaustein, direkt auf die Keramik des Trägerkörpers montiert. Schwankungen der Temperatur werden sofort als Veränderung der Lichtabstrahlung wahrgenommen. Bevorzugt ist der Treiber miniaturisiert dreiteilig aufgebaut und weist eine Vorstufe (Wechselstrom zu Niedervolt-Gleichstrom), eine temperaturgesteuerte Dimmstufe (Gleichstrom) und eine Endstufe für die Versorgung der LED auf. Der Trägerkörper umfasst bevorzugt eine Lampenfassung wie E27, E26, GU10 oder E14. Der Treiber ist bevorzugt unmittelbar an der LED platziert.

Verändert sich die Temperatur der LED bzw. ihre unmittelbare Umgebung, so folgt die Helligkeit der LED sofort der Temperatur. Sinkende Temperaturen am Treiber (durch Wind, Schatten, Strahlungsminderung) führen üblicherweise zu höherer Lichtausstrahlung. Die Geschwindigkeit der Steuerung kann durch Verwendung hochwärmeleitfähiger Keramik als Untergrund der LED und ihres Treibers noch gesteigert werden und durch Verwendung schlechtleitender Keramiken verlangsamt werden, wobei sich die natürlichen (unverstärkten) Helligkeitsschwankungen invers zur Wärmeleitfähigkeit der Keramik verhalten. Es können so durch Zusammenschaltung von Leuchten mit individueller Ansteuerung Helligkeitseffekte in einem Lampenarray entstehen, die beispielsweise Strömungseffekte sichtbar machen.

Im Folgenden werden anhand der Figuren Ausführungsbeispiele der Erfindung näher erläutert. Es zeigen:
- Fig. 1: einen Schnitt durch ein erstes Ausführungsbeispiel,
- Fig. 2: einen Schnitt durch ein zweites Ausführungsbeispiel,
- Fig. 3: ein Detail gemäß Fig. 2,
- Fig. 4: ein weiteres Ausführungsbeispiel,
- Fign. 5a, 5b: ein weiteres Ausführungsbeispiel,
- Fig. 6: ein weiteres Ausführungsbeispiel,
- Fig. 7: ein weiteres Ausführungsbeispiel,
- Fig. 8 - 13c: elektronische Detailschaltungen des Ausführungsbeispiels nach Fig. 7 und
- Fig. 14: eine Tabelle mit den verwendeten Bauteilen in den elektronischen Schaltungen des Ausführungsbeispiels nach Fig. 14.

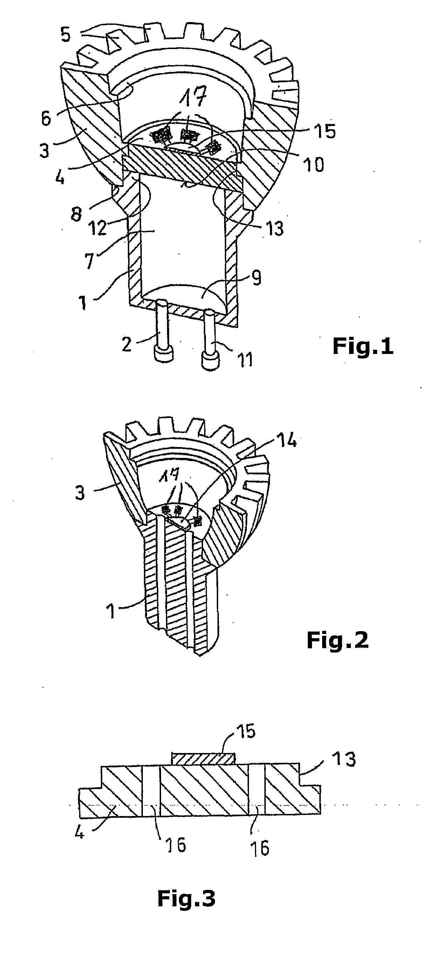

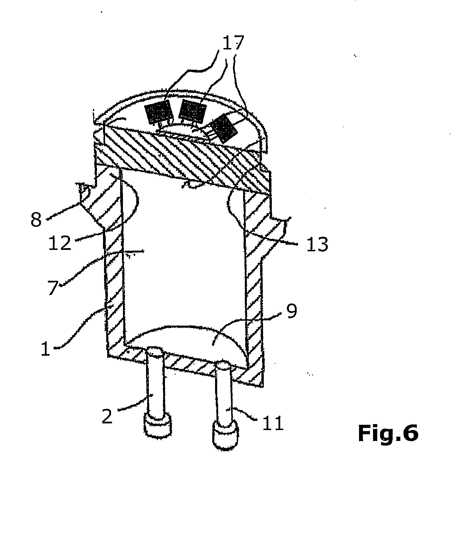

In den Figuren 1 bis 3 und 6 ist eine erfindungsgemäße Sockel-GU10 Leuchte bestehend aus einem Unterteil 1 mit Stromzuführung 2, Lampenschirm 3 und aufklebbarem keramischen Montagesubstrat 4 gezeigt. Die in Figur 6 gezeigte Leuchte weist keinen Lampenschirm auf. Ansonsten ist sie mit der Leuchte von Figur 1 identisch ausgebildet.

Das Montagesubstrat 4 ist in diesem Beispiel ein Trägerkörper bzw. Montagescheibe für die LED und den Treiber 17 und besteht in diesem Beispiel aus grauem hochwärmeleitfähigem AIN und der Lampenschirm 3 aus rubinfarbenem Aluminiumoxid mit Chromoxiddotierung. Das Montagesubstrat 4 ist nicht sichtbar. Der Lampenkörper bzw. Lampenschirm 3 wird mit einer Glasscheibe (nicht gezeigt) am oberen Ende des Lampenschirms 3 abgeschlossen.

Auf der Oberfläche des Keramiksubstrats 4 sind versinterte Metallisierungsbereiche 15 zum Anlöten der oder die LED/LEDs angeordnet. Diese versinterten Metallisierungsbereiche 15 bilden Leiterbahnen und damit eine Platine. Aus Gründen der Übersichtlichkeit sind die Dioden auf den Metallisierungsbereichen 15 nicht gezeigt. Die Treiber 17 sind nur schematisch gezeigt. Die Treiber 17 sind in der gezeigten Ausführungsform nicht auf den gesinterten Metallisierungsbereichen 14 oder 15 angeordnet, sondern auf dem Montagesubstrat 4. Bei weiterer Miniaturisierung der LED (heute sind ja schon 2*2 mm möglich) kann der Treiber auch unmittelbar auf den Metallisierungsbereichen 15 montiert werden. Im Montagesubstrat 4 sind Durchführungen 16 (siehe Figur 3) oder Steckerelemente (2, 11) für die elektrischen Anschlussdrähte angeordnet. Diese Anschlussdrähte werden mit den Treibern 17 und die Treiber 17 mit den Metallisierungsbereichen 15 elektrisch leitend verbunden. Auf dem Montagesubstrat 4 können beliebig viele Metallisierungsbereiche 15 angeordnet sein.

Das Montagesubstrat 4 weist einen radialen Einzug 13 an der zum Metallisierungsbereich 15 gewandten Umfangsfläche zur besseren Fixierung auf.

In einer bevorzugten Ausführungsform ist die Leuchte modulartig aus drei keramischen Teilen gebildet, nämlich aus einem Unterteil 1 mit einer Stromzuführung 2, einem Montagesubstrat 4 bzw. Montagescheibe und einem Lampenschirm 3. Durch die Stromzuführung 2, 11 werden zum Beispiel elektrische Anschlussdrähte (nicht gezeigt in der Figur) in das Unterteil 1 geführt und innerhalb des Unterteils 1 bis zu den Treibern 17 und von dort aus zu den LEDs. Das Montagesubstrat 4 besteht aus einer Keramik mit bevorzugt einer hohen Wärmeableitung. Auf dem Montagesubstrat 4 werden die LED mit den Leiterbahnen verlötet. Der Lampenschirm 3 besteht ebenfalls bevorzugt aus einer Keramik mit Kühlrippen 5 auf seiner Außenfläche. Die Kühlrippen 5 erstrecken sich in Längsrichtung des Lampenschirms 3.

In dieser Beschreibung ist für das Montagesubstrat 4 eine Montagescheibe gezeigt. Montagesubstrat ist der allgemeinere Begriff, da das Montagesubstrat nur bevorzugt eine Montagescheibe ist. Das Montagesubstrat kann auch nicht scheibenförmig ausgebildet sind. Ansonsten beschreiben beide Begriffe den gleichen Gegenstand.

Zur besseren Befestigung des Lampenschirms 3 auf dem Unterteil 1 weit dieser auf seiner Innenfläche einen Absatz 8 auf, mit welchem der Lampenschirm 3 auf einem entsprechenden Absatz oder Einzug 13 auf dem Montagesubstrat 4 aufsitzt. Das untere Ende des Lampenschirms 3 umgreift dabei das Montagesubstrat 4 und das obere Ende 12 des Unterteils 1. Das Montagesubstrat 4 ist so zwischen dem Lampenschirm 3 und dem Unterteil 1 angeordnet, dass es von außen nicht sichtbar ist. Das obere, der Montagescheibe 4 abgewandte Ende des Lampenschirms 3 weist einen inneren Absatz 6 zur Aufnahme einer Glasscheibe auf. Bevorzugt ist das Unterteil 1 zylinderförmig mit einem inneren Hohlraum 7 ausgebildet. Hierdurch wird Material eingespart.

Die Leuchte besteht somit aus einem Unterteil 1, einer Montagescheibe 4 und einem Lampenschirm 3, der die LED umgibt. Auf dem Montagesubstrat 4 wird die Lichtquelle befestigt.

Das Unterteil 1 kann auch als Stecker zur Herstellung von Steckverbindungen mit entsprechenden Steckdosen oder mit Gewinden zum Einschrauben in Halterungen oder, bei mit Anschlusspolen belegten Sockeln, in Lampenfassungen ausgestattet sein.

Der Lampenschirm 3 hat auf seinem Umfang gleichmäßig verteilt Kühlrippen 5, so dass der Umriss des Lampenschirms 3 an seiner Öffnung aussieht wie ein Zahnrad. Die Kühlrippen 5 sind, insbesondere bei Hochleistungs-LEDs, von Vorteil, um die entstehende Wärme an die Umgebungsluft abzuführen. Ihr Querschnitt kann auch jede andere mögliche Form annehmen wie beispielsweise halbrund oder halbelliptisch. Bei LEDs mit niedrigen Wärmeverlusten kann der Schirm auch glatt sind. Der Schirm kann ebenfalls unterschiedliche Formen aufweisen, beispielsweise oval oder vieleckig.

Das Unterteil 1 kann auch einstückig mit dem Montagesubstrat 4 ausgebildet sein, dies zeigt Figur 2.

Figur 6 zeigt eine Ausführungsform der Leuchte gemäß Figur 1 ohne Lampenschirm 3. Diese schirmlose Variante ist von Vorteil, weil Wärme und/oder Sonnenstrahlung unmittelbar (nicht abgeschirmt) die Treibertemperatur beeinflussen und durch diese Temperaturänderung die LEDs in kürzester Zeit nachgeregelt werden können. Gleiche Bezugszeichen in den Figuren 1, 2 und 6 zeigen auch den gleichen Gegenstand.

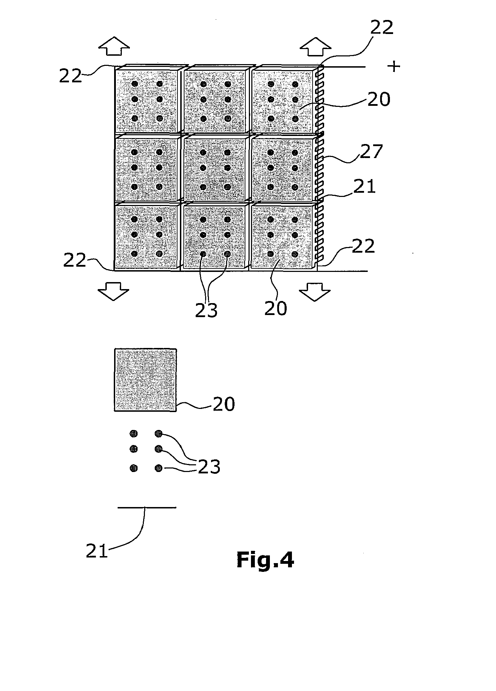

Figur 4 zeigt einen Array aus 9 Diodenträgern 20, die aus den in der WO 2007/107601 A2 (siehe Beschreibungseinleitung) beschriebenen keramischen Kühlkörpern mit versinterten Metallisierungsbereichen als Leiterbahnen bestehen. Auf jedem Diodenträger 20 sind 6 Dioden bzw. LEDs 23 aufgebracht (nur schematisch gezeigt) und über die Metallisierungsbereiche elektrisch miteinander verbunden (nicht gezeigt). Zur Kühlung weisen die Diodenträger 20 Finnen 27 auf.

In der Figur 4 sind quadratische Diodenträger 20 gezeigt. Es kann auch jede andere Form verwendet werden. Die einzelnen Diodenträger 20 sind in einem Metallrahmen 21 eingebaut oder eingehängt, der auch zugleich als Stromzufuhr für die LEDs 23 dient. Das Array aus den Diodenträgern 20 dient zur flächigen Beleuchtung, kann aber auch zur punktförmigen Beleuchtung eingesetzt werden. Hierzu werden die Diodenträger 20 in unterschiedlichen Winkeln so im Metallrahmen 21 fixiert, dass sich ein fokussiertes Licht ergibt.

Durch Hochklappen der Ecken 22 entsteht zum Beispiel eine parabolische Anordnung mit einem Lichtbrennpunkt. Das Array kann auch eben zur flächenhaften Beleuchtung oder gebogen sein für eine punktförmige Beleuchtung.

Erfindungsgemäß ist auf zumindest einem, bevorzugt auf jedem Diodenträger 20 auch zugleich der Treiber der Ansteuerung der LEDs angeordnet. In den Figuren ist dies nicht gezeigt. Die versinterten Metallisierungsbereiche sind hierbei als Leiterbahnen ausgebildet auf denen die LEDs angeordnet sind.

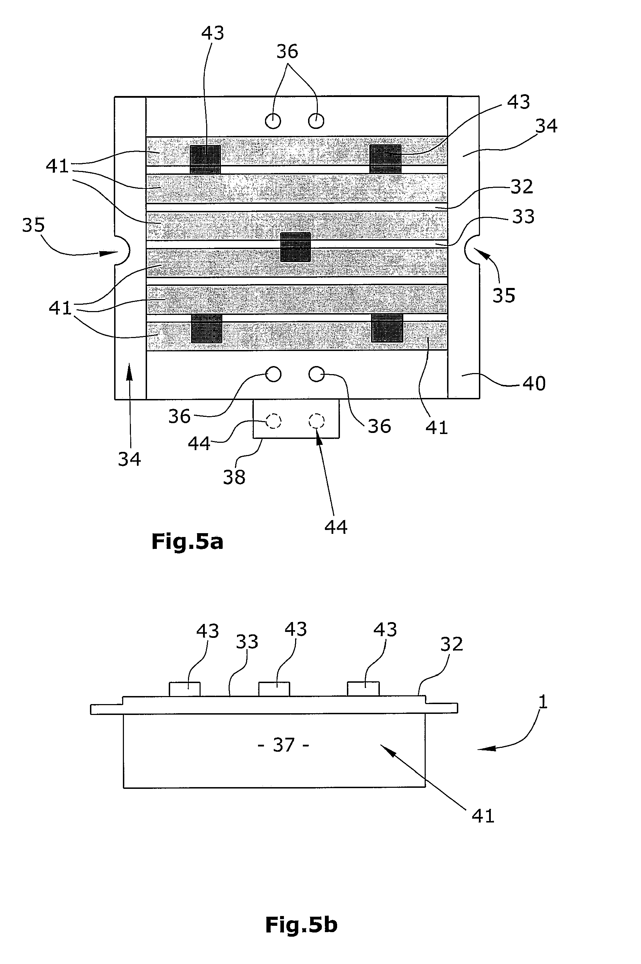

Figuren 5a, 5b zeigen einen keramischen Diodenträger 40 in Aufsicht, Figur 5a und im Schnitt, Figur 5b, der aus einem keramischen Trägerkörper 32 besteht, der einstückig mit Wärme abführenden keramischen Kühlelementen 37, hier Finnen, versehen ist. Auf der Oberfläche 33 des Trägerkörpers 32 sind versinterte Metallisierungsbereiche 41 aufgebracht, so dass der Diodenträger 40 eine Platine ist. Auf dem Diodenträger 40 sind LEDs 43 befestigt, die auf die Metallisierungsbereiche 41 aufgelötet sind. Zur stromleitenden und/oder mechanischen Verbindung zweier oder mehr Diodenträger 40 zu einem Array weisen die Diodenträger 40 Stecker und/oder Buchsen als Verbindungselemente auf, mit denen die Diodenträger 40 direkt oder indirekt miteinander verbunden sind.

Auf den Diodenträgern 40 sind neben den LEDs auch zugleich deren Treiber angeordnet und entsprechend mit den LEDs verschaltet.

In einer weiteren Ausführungsform sind die Stecker Stifte 36, insbesondere nach der Norm GU 5,3 und die Buchsen sind an die Stifte angepasst. Figur 5 zeigt eine Ausführungsform mit ausschließlich Steckern, die hier aus Stiften 36 bestehen. Diese Stifte 36, zwei für jeden Stecker, sind am Randbereich des Diodenträgers 40 angeordnet, wobei sich die Stecker 36 an gegenüberliegenden Seiten des Diodenträgers 40 befinden. Zur Verbindung zweier Diodenträger 40 wird hier ein separates Verbindungselement 38 verwendet. Dieses Verbindungselement 38 ist in der hier gezeigten Variante eine rechteckige oder quadratisch geformte Platte mit durchgehenden Bohrungen 44. In diese Bohrungen 44 sind die Stifte 36 am Diodenträger 40, einen elektrischen Kontakt herstellend, eingesteckt. Jedes Verbindungselement 38 weist vier Bohrungen 44 auf. Jeweils zwei Bohrungen 44 auf dem Verbindungselement 38 sind miteinander elektrisch verbunden.

Zur Befestigung der Diodenträger 40 in einem Rahmen weisen diese zumindest an einem Rand einen Streifen 34 ohne Metallisierungsbereiche 41 und ohne LEDs 43 und Treiber auf. Dieser Streifen 34 bildet damit eine Keramik-Feder zur Befestigung an einem Rahmen oder auch einer Schiene. Zumindest zwei Schienen bilden dann den Rahmen.

Der Streifen 34 weist zur Befestigung mit bevorzugt einer Schraube zumindest eine Aussparung auf.

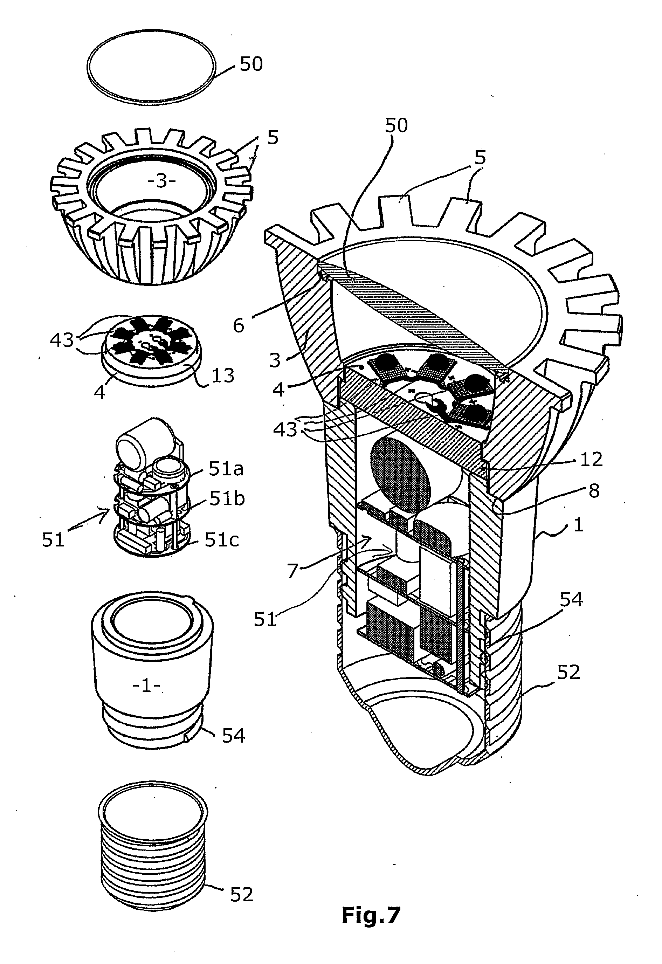

Figur 7 zeigt im Schnitt und in einer Explosionszeichnung eine alternative bevorzugte Ausführungsform einer erfindungsgemäßen Leuchte. Diese Leuchte ähnelt der von Figur 1 und ist für die Fassung E27 vorgesehen. Die Leuchte besteht aus sechs Teilen bzw. Einheiten, nämlich aus einer metallischen Gewindebuchse 52, einem keramischen Unterteil 1, einem Elektronikmodul 51 als Treiber zur Ansteuerung der LEDs 43, einem keramischen Montagesubstrat 4, einem keramischen Lampenschirm 3 mit Kühlrippen 5 und einer Glasscheibe 50.

Das Unterteil 1 ist als beidseitig offener hohler Zylinderkörper ausgebildet und ist der zentrale Trägerkörper der Leuchte. An seinem dem Lampenschirm 3 abgewandten Ende weist das Unterteil 1 ein zur Außenwand des Unterteils 1 radial eingezogenes äußeres Gewinde 54 auf. Auf dieses äußere Gewinde 54 ist die Gewindebuchse 52 mit ihrem inneren Gewinde aufgedreht. Diese Gewindebuchse 52 ist gemäß Norm E27 ausgeführt und besteht aus Metall.

In das Unterteil 1 ist das Elektronikmodul 51 eingeschoben, welches die Treiber enthält. Die elektrische Anbindung des Elektronikmoduls 51 ist zur besseren Übersicht nur angedeutet. Das Elektronikmodul 51 ist mit den LEDs 43 auf dem Montagesubstrat 4 elektrisch verbunden. Hierzu weist das Montagesubstrat 4 zwei Bohrungen auf, durch welche die elektrische Verbindung vom Elektronikmodul 51 zu den LEDs geführt ist.

Das keramische Montagesubstrat 4 ist auf das Unterteil 1 geklebt. Das Montagesubstrat 4 ist der Trägerkörper bzw. die Montagescheibe für die LEDs 43 und besteht bevorzugt aus grauen hochwärmeleitfähigem AIN und der Lampenschirm 3 aus rubinfarbenem Aluminiumoxid mit Chromoxiddotierung. Das Montagesubstrat 4 ist von außen nicht sichtbar. Der Lampenschirm 3 wird mit einer Glasscheibe 50 am oberen Ende des Lampenschirms 3 abgeschlossen.

Auf der Oberfläche des Keramiksubstrats 4 sind versinterte Metallierungsbereiche zum Anlöten der LEDs 43 angeordnet. Diese versinterten Metallisierungsbereiche bilden Leiterbahnen und damit eine Platine. Die Treiber sind im Elektronikmodul 51 auf drei vertikal übereinander angeordneten Leiterplatinen 51a, 51b, 51c angeordnet. Wenn der Platz ausreicht, werden die Treiber bevorzugt auf den gesinterten Metallisierungsbereichen oder auf dem puren Montagesubstrat 4 angeordnet. Die Treiber werden elektrisch mit den LED verbunden. Alternativ können die LEDs und der Trägerkörper, d. h. das Keramiksubstrat 4, über eine elektrisch leitende Zwischenschicht elektrisch miteinander verbunden sein.

Auf dem Montagesubstrat 4 können beliebig viele Metallisierungsbereiche angeordnet sein. In der Ausführungsform von Figur 7 sind die Treiber jedoch im Elektronikmodul 51 angeordnet, welches sich im Hohlraum 7 des Unterteils 1 befindet. Bevorzugt wird das Elektronikmodul 51 im Unterteil 1 mit einer wärmeleitfähigen elektrisch isolierenden Vergussmasse fixiert.

Das Montagesubstrat 4 kann auch nicht scheibenförmig ausgebildet sein. Das Montagesubstrat 4 weist einen radialen Einzug 13 zur besseren Fixierung auf. Das Montagesubstrat 4 besteht aus einer Keramik mit bevorzugt einer hohen Wärmeableitung. Auf dem Montagesubstrat 4 werden die LED mit den Leiterbahnen verlötet.

Der Lampenschirm 3 besteht bevorzugt aus einer Keramik mit Kühlrippen 5 auf seiner Außenfläche. Die Kühlrippen 5 erstrecken sich in Längsrichtung des Lampenschirms 3.

Zur besseren Befestigung des Lampenschirms 3 auf dem Unterteil 1 weist dieser auf seiner Innenfläche einen Absatz 8 auf, mit welchem der Lampenschirm 3 auf einem entsprechenden Absatz oder Einzug 13 auf dem Montagesubstrat 4 aufsitzt. Das untere Ende des Lampenschirms 3 umgreift dabei das Montagesubstrat 4 und das obere Ende 12 des Unterteils 1. Bevorzugt ist das Unterteil 1 zylinderförmig ausgebildet mit einem inneren Hohlraum 7. Hierdurch wird Material eingespart und es ist Platz für das Elektronikmodul 51 geschaffen.

Das Unterteil 1 kann auch als Stecker zur Herstellung von Steckverbindungen mit entsprechenden Steckdosen oder mit Gewinden zum Einschrauben in Halterungen oder, bei mit Anschlusspolen belegten Sockeln, in Lampenfassungen ausgestattet sein.

Der Lampenschirm 3 hat auf seinem Umfang gleichmäßig verteilt in Längsrichtung der Leuchte verlaufende Kühlrippen 5, so dass der Umriss des Lampenschirms 3 an seiner Öffnung aussieht wie ein Zahnrad. Die Kühlrippen 5 sind, insbesondere bei Hochleistungs-LEDs, von Vorteil, um die entstehende Wärme an die Umgebungsluft abzuführen. Ihr Querschnitt kann auch jede andere mögliche Form annehmen wie biespielsweise halbrund oder halbelliptisch. Bei LEDs mit niedrigen Wärmeverlusten kann der Schirm auch glatt sein. Der Schirm kann ebenfalls unterschiedliche Formen aufweisen, beispielsweise oval oder vieleckig.

Durch die Verwendung von keramischen Gehäuse- und Platinenkomponenten ist die elektrische Isolation gegeben und der Treiber kann direkt ohne galvanische Trennung angeschlossen werden. Aufgrund der thermischen Wärmeleiteigenschaften der Keramik in Verbindung mit einer wärmeleitfähigen Vergussmasse und der räumlich kompakten Sandwich-Bauweise (siehe Figur. 7), ergibt sich eine sehr gute Gesamtwärmeverteilung im Sockelinneren bzw. im Inneren des Unterteils 1. Die eigene Verlustleistung des Treibers und die Wärmeentwicklung durch die LEDs kommen mit geringer Zeitverzögerung zur Elektronik, die daraufhin den Versorgungsstrom der LEDs so weit linear zurückregelt, dass eine frei vorgegebene Maximaltemperatur des Gesamtsystems nicht überschritten wird. Somit ist die Treiberschaltung selbst, aber auch die LEDs vor Überhitzung geschützt. Je besser die Kühlung ist, um so heller leuchten die LEDs und umgekehrt. Eine thermische Überlastung ist weitgehend ausgeschlossen. Zusätzlich kann die gesamte Schaltung mit handelsüblichen Phasenabschnittsdimmern in weiten Bereichen manuell abgedimmt werden.

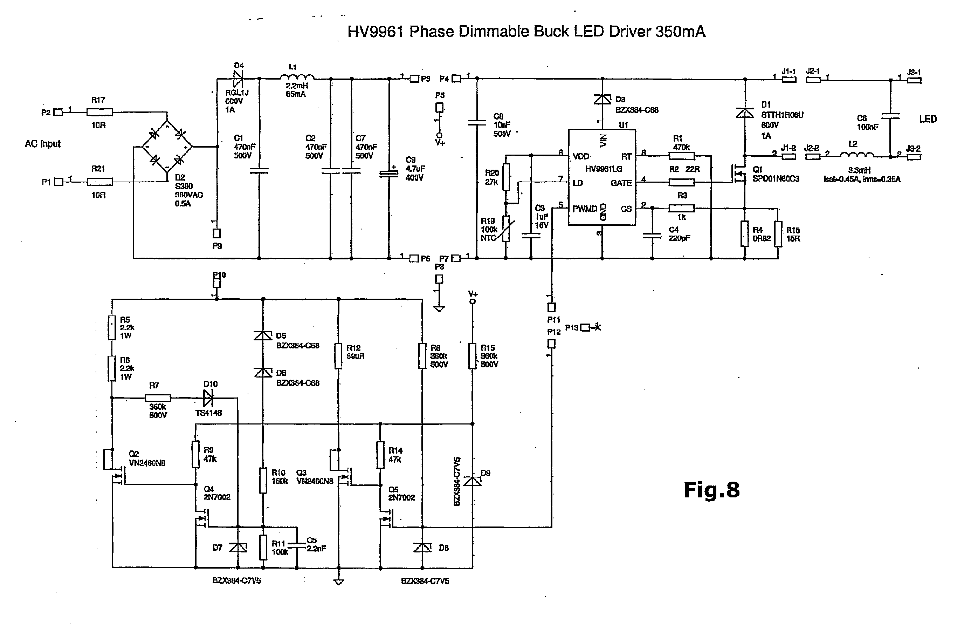

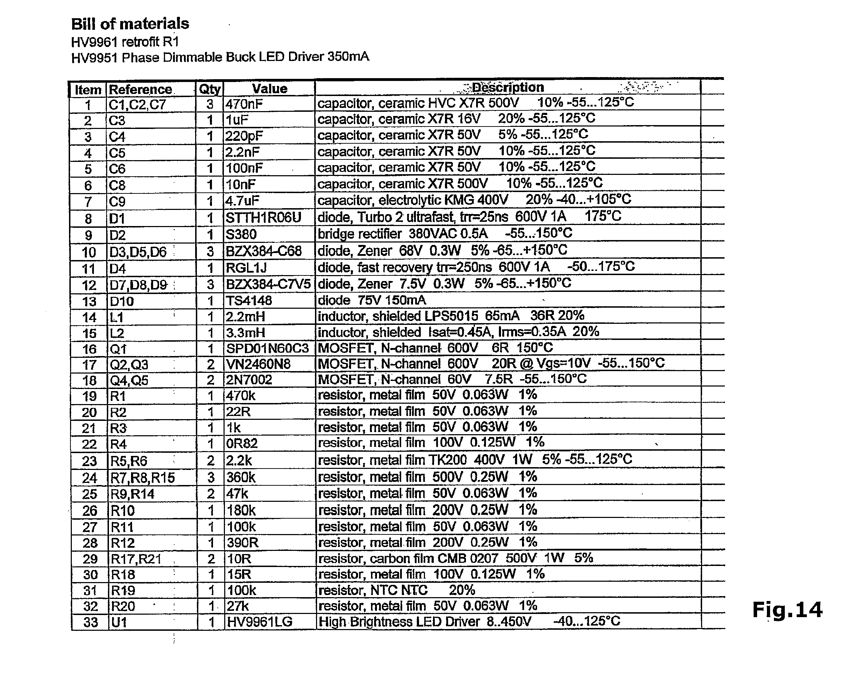

Figur 8 zeigt die vollständige elektronische Schaltung der Treiber, wobei in der Figur 14 die verwendeten Bauteile aufgelistet sind.

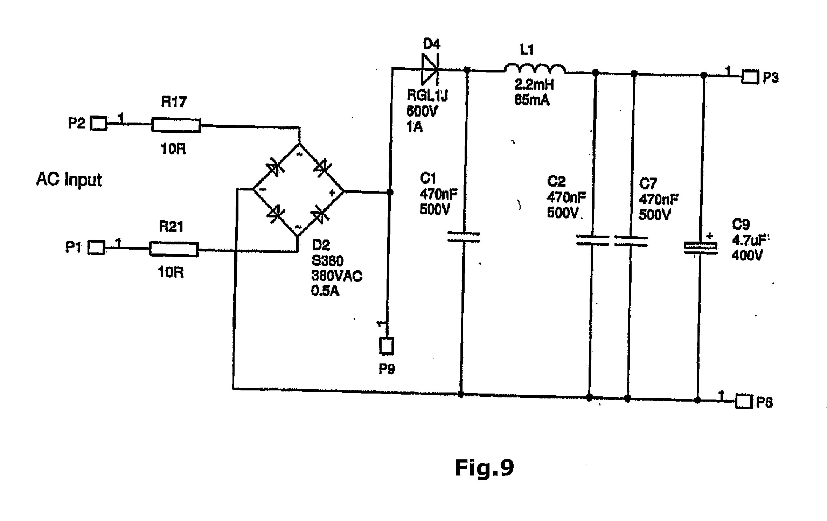

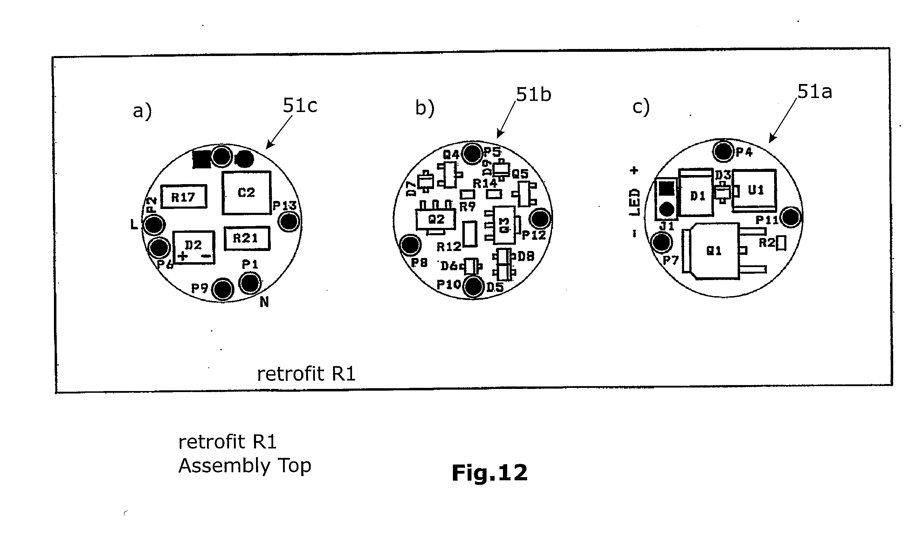

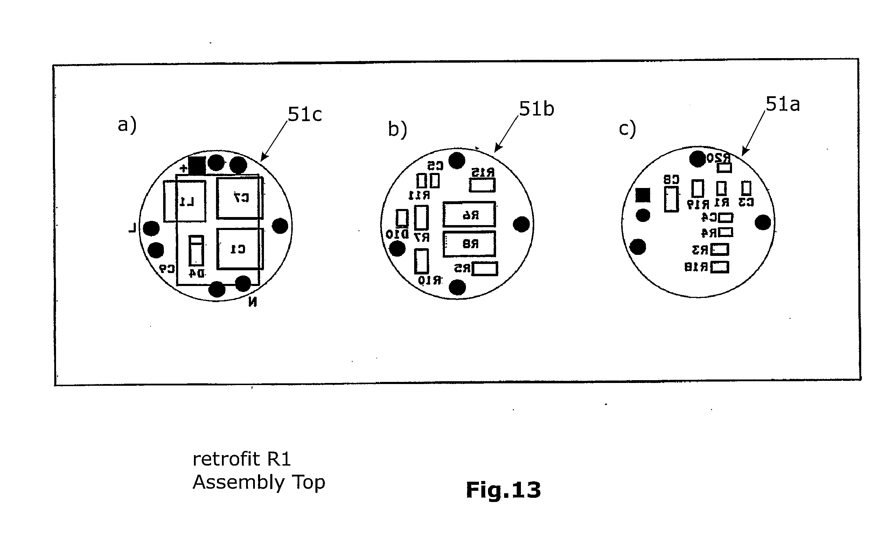

Figur 9 zeigt die elektronische Schaltung des Elektronikmoduls 51c (siehe Figur 7). Die Figuren 12a und 13a zeigen eine schematische Ansicht des Elektronikmoduls 51c von oben und unten. Das Elektronikmodul 51c ist zuständig für den Anschluss an das 230-Volt-Netz und weist einen Brückengleichrichter mit Dioden D2 auf. Zur Eingangsstrombegrenzung sind dem Brückengleichrichter die beiden Widerstände R17 und R21 vorgeschaltet, um im Falle entladener Kondensatoren einen Kurzschluss zu vermeiden. Die Widerstände R17 und R21 dienen zudem als Überspannungsschutz für Netzspannungen bis zu 500 Volt. Die Brücke des Brückengleichrichters ist mit Glättkondensatoren C1, C2 und C7 versehen, die als Keramikkondensatoren ausgebildet sind und eine Lebensdauer von bis zu 500.000 Betriebsstunden aufweisen. Mit den Kondensatoren und der Spule L1 wird eine Filterung bewirkt, um hohe Störfrequenzen kurzzuschließen.

Der Kondensator C9 ist ein Aluminiumelektrolidkondensator zum Dimmen der erzeugten Gleichspannung

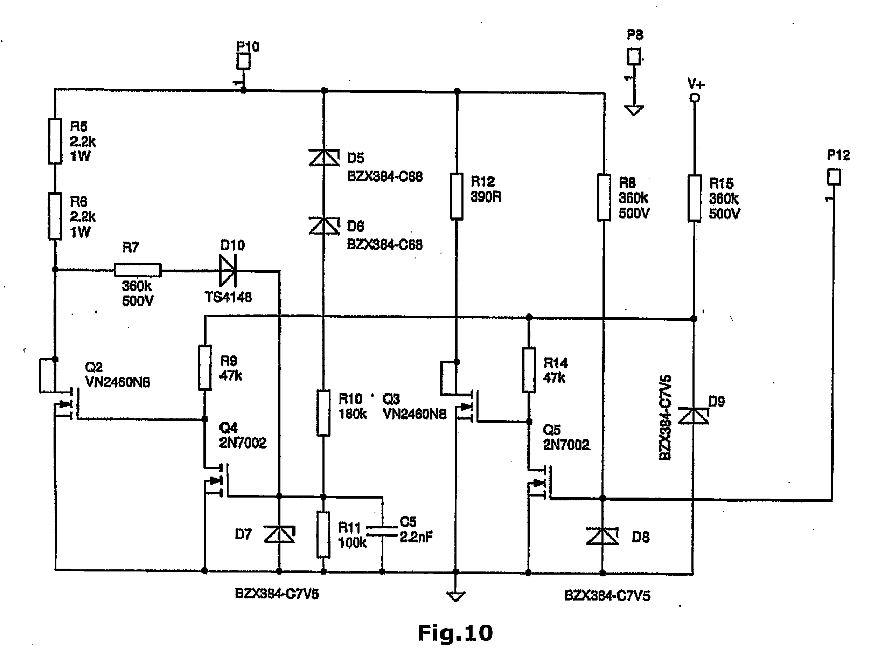

Figur 10 zeigt die elektronische Schaltung des Elektronikmoduls 51b (siehe Figur 7). Die Figuren 12b und 13b zeigen eine schematische Ansicht des Elektronikmoduls 51b von oben und unten. Das Elektronikmodul 51b ist eine Dimmschaltung zur Phasenanschnittsdimmung. Die Dimmschaltung verwendet Spannungsteiler, Dioden und MOS-Feldeffekttransistoren. Die Dimmschaltung simuliert eine ohmsche Last im Bereich von ca. 10 Watt, damit an den Dimmern die zu deren Betrieb erforderliche Leistung anliegt.

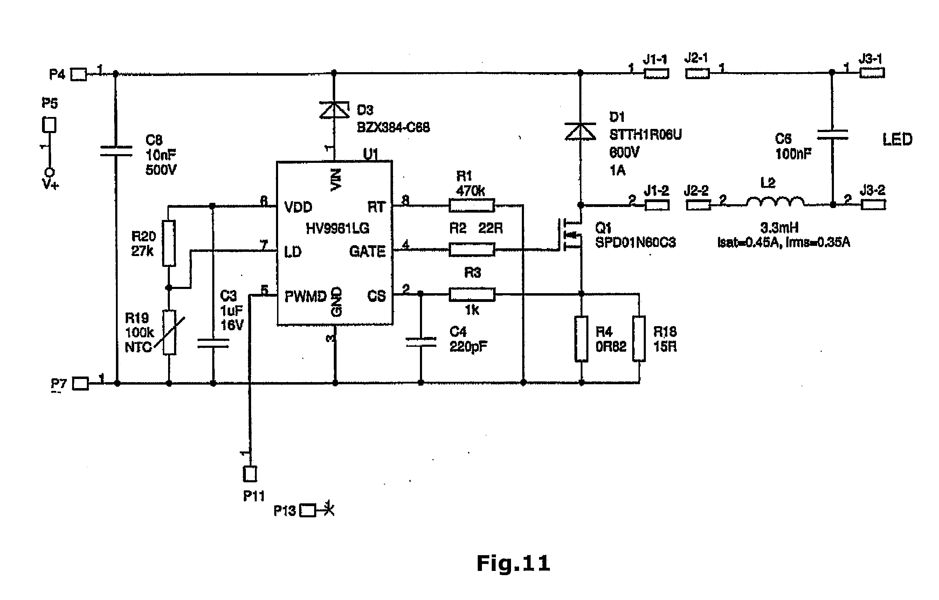

Figur 11 zeigt die elektronische Schaltung des Elektronikmoduls 51a (siehe Figur 7). Die Figuren 12c und 13c zeigen eine schematische Ansicht des Elektronikmoduls 51a von oben und unten. Das Elektronikmodul 51a weist einen integrierten Schaltkreis des Typs HV9961LG zur Steuerung des ausgangsseitigen LED-Stroms auf. An dem Eingang 7 des integrierten Schaltkreises ist ein temperaturabhängiger Widerstand (NTC) R19 angeordnet, der temperaturabhängig ein Steuersignal für den integrierten Schaltkreis zur temperaturabhängigen Ansteuerung der LED generiert. Die temperaturabhängige Dimmung erfolgt unter Verwendung der Pulsweiten-Modulation. Der integrierte Schaltkreis HV9961LG ist für den militärischen Temperaturbereich für Temperaturen von - 55°C bis + 125°C mit einer Leistungsklasse von 10 Watt ausgelegt, um eine hohe Lebensdauer zu erzielen. Der integrierte Schaltkreis erzeugt temperaturabhängig eine gegenüber der Netzspannung reduzierte Versorgungsspannung für die LED, wobei die verbleibende Restspannung als Wärme abgeführt wird. Ausgangsseitig ist der integrierte Schaltkreis mit einem MOS-Feldeffekttransistor Q1 und mit einer Drosselspule L2 mit einer Induktivität von 3 Millihenry versehen. Mit der Steuerschaltung gemäß Fig. 11 können bis zu 8 LED betrieben werden.

Die Vorteile der Erfindung sind somit unter anderem:
1. Optimale Schutzisolation durch Verwendung keramischer Werkstoffe.
2. Optimale Entwärmung durch Verwendung keramischer Werkstoffe.
3. Ansprechendes Design durch Verwendung keramischer Werkstoffe als Gehäuse.
4. Überhitzungsschutz durch eingebauten, durch vergießen thermisch gekoppeltes Elektronikmodul 51 bzw. NTC.

## Patentansprüche

1. LED-Leuchte mit mindestens einer auf einem keramischen Trägerkörper (4, 32) angeordneten und mit diesem wärmeleitend verbundenen LED (43) und mit einem elektrisch mit der LED verbundenen elektronischen Treiber (17) zur Leistungssteuerung und -versorgung der LED, **dadurch gekennzeichnet, dass** der Treiber (17) mindestens zwei übereinander gestapelt angeordnete Leiterplatinen (51a, 51b, 51c) aufweist.

2. LED-Leuchte nach Anspruch 1, **dadurch gekennzeichnet, dass** der Träger drei gestapelte Leiterplatinen (51a, 51b, 51c) aufweist, wobei die erste Leiterplatine (51c) eine Vorstufe, die zweite Leiterplatine (51b) eine temperaturgesteuerte Dimmstufe und die dritte Leiterplatine (51a) eine Endstufe für die Versorgung der LED (43) bilden.

3. LED-Leuchte nach Anspruch 2, **dadurch gekennzeichnet, dass** die erste Leiterplatine (51c) als Vorstufe eine Brückengleichrichterschaltung mit Glättkondensatoren und einer Filterschaltung in dem Brückenzweig aufweist.

4. LED-Leuchte nach Anspruch 2 oder 3, **dadurch gekennzeichnet, dass** zumindest einer der Glättkondensatoren ein Aluminiumelektrolytkondensator mit einer Kapazität im Bereich zwischen ca. 1 - 10 Mikrofarad aufweist.

5. LED-Leuchte nach einem der Ansprüche 2 bis 4, **dadurch gekennzeichnet, dass** die zweite Leiterplatine (51b) mindestens einen ohmschen Spannungsteiler aufweist, um eine ohmsche Last im Bereich von ca. 5 - 20 Watt und vorzugsweise ca. 10 Watt für die LED-Dimmer zu simulieren.

6. LED-Leuchte nach einem der Ansprüche 2 bis 5, **dadurch gekennzeichnet, dass** die dritte Leiterplatine (51a) einen temperaturabhängigen Widerstand (R19) aufweist, der die LED (43) mit einer gegenüber der Netzspannung temperaturabhängig reduzierten Versorgungsspannung versorgt.

7. LED-Leuchte nach einem der vorhergehenden Ansprüche, **dadurch gekennzeichnet, dass** die dritte Leiterplatine (51a) zur Steuerung des LED-Stroms einen integrierten Schaltkreis aufweist, der für einen Temperaturbereich zwischen - 55°C und + 125°C ausgelegt ist und mit dessen Eingang der temperaturabhängige Widerstand (R19) verbunden ist.

8. LED-Leuchte nach einem der vorhergehenden Ansprüche, **dadurch gekennzeichnet, dass** zwischen dem Ausgang des integrierten Schaltkreises und der LED (43) ein MOS-Feldeffekttransistor (Q1) und/oder eine Drosselspule (L2) angeordnet ist.

9. LED-Leuchte nach einem der vorhergehenden Ansprüche, **dadurch gekennzeichnet, dass** der Träger zur Leistungssteuerung der LED (43) eine Schaltung zur Phasenantrittssteuerung aufweist.

10. LED-Leuchte nach einem der vorhergehenden Ansprüche, **dadurch gekennzeichnet, dass** der Treiber (17) zur Regelung des Versorgungsstroms der LED (43) in Abhängigkeit von der Temperatur des Trägerkörpers (4, 32) ausgebildet ist.

11. LED-Leuchte nach einem der vorhergehenden Ansprüche, **dadurch gekennzeichnet, dass** der Treiber (17) zusammen mit dem Trägerkörper (4, 32) in einer wärmeleitfähigen Vergussmasse vergossen ist.

12. LED-Leuchte nach einem der vorhergehenden Ansprüche, **dadurch gekennzeichnet, dass** der Trägerkörper (4, 32) auf seiner Oberfläche versinterte Metallisierungsbereiche aufweist, mit der die LED (43) und der Trägerkörper entweder direkt oder über eine elektrisch leitende Zwischenschicht elektrisch verbunden sind.

13. LED-Leuchte nach einem der vorhergehenden Ansprüche, **dadurch gekennzeichnet, dass** die LED (43), der Trägerköper (4, 32) und der Treiber (17) von einem gemeinsamen Gehäuse umschlossen sind.

14. LED-Leuchte nach einem der vorhergehenden Ansprüche, **dadurch gekennzeichnet, dass** der Treiber (17) auf der der LED (43) gegenüber liegenden Seite des Trägerkörpers (4, 32) angeordnet ist.
